# FASCICULE DE BREVET EUROPEEN

(11) **EP 0 725 544 B1**
(45) Date de publication et mention de la délivrance du brevet: **26.07.2000**
(21) Numéro de dépôt: 96400164.8
(22) Date de dépôt: 24.01.1996
(51) Int. Cl.: H04N 7/167

(54) **Système de déport d'un embrouilleur de signal de télévision**
Verfahren zum Versetzen eines Verschlüsselers für Fernsehsignale
System for displacing a television signal scrambler

(30) Priorité: 31.01.1995 FR 9501099
(43) Date de publication de la demande: 07.08.1996
(73) Titulaire: Thomson Broadband Systems, 29608 Brest (FR)
(72) Inventeur: Chapel, Claude, F-92402 Courbevoie Cedex (FR); Lemonnier, Philippe, F-92402 Courbevoie Cedex (FR)
(74) Mandataire: Guérin, Michel

(56) Documents cités:
- EP-A- 0 461 029
- EP-A- 0 489 929
- GB-A- 2 196 516
- INTERNATIONAL BROADCASTING CONVENTION , 23 - 27 Septembre 1988 BRIGHTON, UK, pages 318-322, S.R.ELY ET AL. 'CONDITIONAL ACCESS SRAMBLING TECHNIQUES FOR TERRESTRIAL UHF TELEVISION BROADCASTS'
- 42ND ANNUAL CONVENTION AND EXPOSITION OF THE NATIONAL CABLE TELEVISION ASSOCIATION, 6 - 9 Juin 1993 SAN FRANCISCO, CALIFORNIA, US, pages 308-316, DANIEL M. MOLONEY 'DIGITAL COMPESSION IN TODAYS ADDRESSABLE ENVIRONMENT'

## Description

L'invention concerne un système de déport d'un embrouilleur pour la transmission d'un signal de télévision crypté.

Dans un système de télévision cryptée, la constitution de l'image embrouillée est en général assurée sur un site qui comprend au minimum :
- le ou les studios de la régie finale
- l'embrouilleur.

C'est le site de production.

Le site de départ d'émission vers les abonnés ou de transmission est en général un site distinct. Le point d'émission, qu'il s'agisse d'émission hertzienne, par satellite, par fibre optique ou par câble est en fait, fréquemment, un site appartenant à un opérateur de télécommunications. La liaison entre le site de production et le site de transmission, qui transporte des données numériques, est généralement réalisée par fibre optique, faisceau hertzien ou câble coaxial. C'est le signal crypté qui est transmis sur cette liaison.

Les procédés d'embrouillage de l'image actuellement exploités sont connus, par exemple :
- le "discret", procédé agissant par décalage de ligne selon des retards générés de manière pseudo-aléatoire,
- le brassage de ligne connu sous l'appellation Anglo-Saxonne de "Line Shuffling", qui consiste à brasser les lignes à l'intérieur de blocs de lignes, également de façon pseudo-aléatoire,
- la coupure et rotation de ligne, de l'appellation Anglo-Saxonne "Line Cut and Rotate" qui consiste en la sélection, de manière pseudo-aléatoire, d'un point de coupure sur la ligne et la permutation des segments ainsi déterminés.

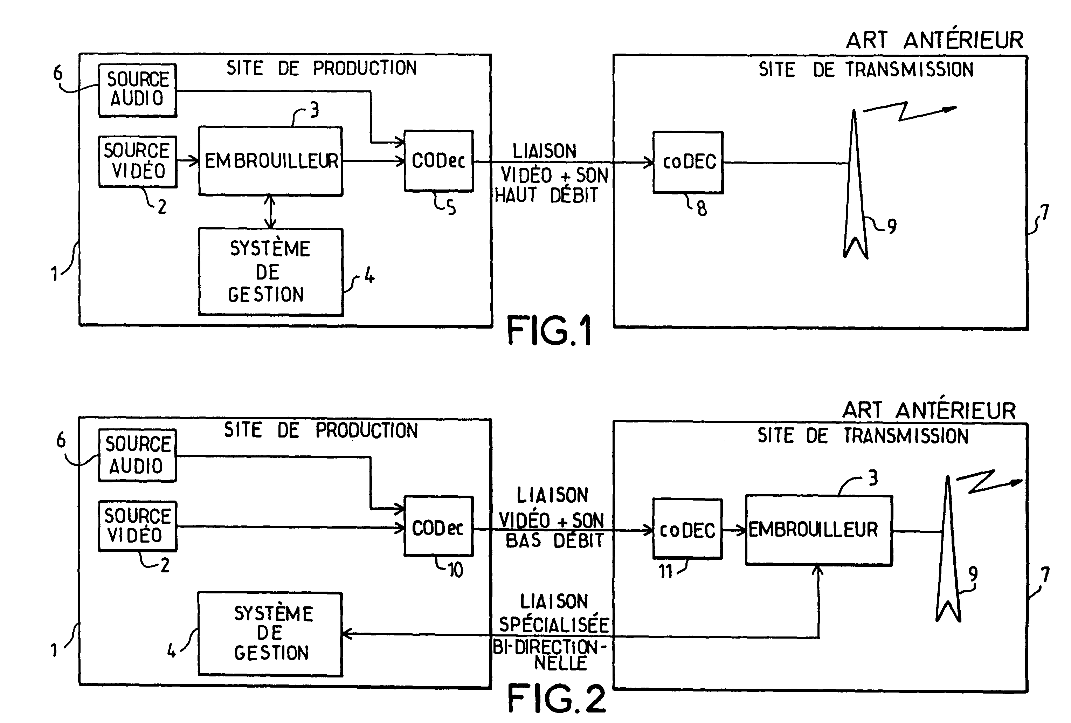

La configuration du dispositif global d'embrouillage et de transmission avec embrouillage au niveau du site de production, telle que connue de l'art antérieur, est représentée en figure 1.

Sur le site de production 1, la source vidéo 2 fournit les signaux analogiques vidéo à un embrouilleur 3. Cet embrouilleur est géré par un système de gestion 4 qui a pour fonction, entre autres, la commande de l'embrouilleur, la génération de messages de contrôle d'accès transmis généralement dans le signal vidéo vers l'abonné.

Le signal vidéo en sortie de l'embrouilleur 3 attaque un CODec 5 qui reçoit également l'information son provenant d'une source audio 6. Le CODec transmet ces informations multiplexées sur une liaison vidéo en les codant de manière classique, c'est à dire en réalisant par exemple un codage MIC ou Modulation par Impulsions et Codage et en structurant ces données numériques c'est à dire en ajoutant les signaux de contrôle et autres mots de synchronisation nécessaires à cette transmission. Sur le site de transmission 7 et en réception de ligne, un coDEC 8 réalise le décodage, opération inverse du codage précédent, correspondant à la restitution du signal analogique vidéo embrouillé et du son. Ces signaux sont enfin diffusés à travers une antenne 9.

Ce dispositif nécessite une liaison haut débit entre le site émetteur du signal vidéo et le site récepteur. En effet, l'embrouillage détruit la corrélation spatiale (ligne à ligne) et temporelle (trame à trame) de l'image. La redondance dans l'information transmise, due à la corrélation, caractéristique des images vidéo, est habituellement exploitée dans le domaine de la compression de données, par transposition des signaux dans le domaine fréquentiel, c'est par exemple la transformation Cosinus Discrète, et/ou par prédiction d'image, c'est par exemple l'estimation de mouvement. Du fait de l'embrouillage du signal, cette redondance disparaît et toute compression efficace du signal à transmettre est impossible nécessitant, par là même, une liaison haut débit. Les données sont ainsi transportées dans des canaux de type 140 Mbits/s.

Ces liaisons sont très coûteuses et une solution à cet inconvénient, toujours selon l'art connu, consiste à déporter l'embrouilleur sur le site de transmission. La configuration est représentée sur la figure 2, en conservant les mêmes numérotations que pour la figure 1 pour les éléments identiques.

Sur le site de production 1, la source vidéo 2 fournit les signaux analogiques vidéo directement à un CODec 10, qui reçoit également le signal son provenant de la source audio 6. Le CODec a pour rôle, en complément du codage MIC, de comprimer les données numériques vidéo. Il transmet les données sur une liaison bas débit vidéo+ son, par exemple de type 8 Mbits/s, vers un coDEC 11 du site de transmission 7. Ce coDEC décompresse et décode les données numériques puis transmet le signal analogique à un embrouilleur 3 qui se charge de fournir à l'antenne 9, les signaux vidéo+son embrouillés.

Le système de gestion 4 ne peut être déporté sur le site de transmission. En effet, du fait de son importance stratégique, le système de gestion contient, entre autres, les circuits réalisant les algorithmes de cryptage des données de contrôle d'accès, il est nécessaire de le conserver sur le lieu où est réalisée également la gestion des abonnés et la gestion des plages temporelles de brouillage. Ainsi, une liaison supplémentaire spécialisée, bidirectionnelle, relie le système de gestion 4 du site de production à l'embrouilleur 3 du site de transmission.

Cependant, si la sécurité au niveau du système de gestion proprement dit est ainsi garantie, il n'en est pas de même au niveau du système d'ensemble puisque des données sensibles circulent sur une liaison spécialisée. Cette liaison est publique et peut donc être espionnée. D'autres inconvénients sont dûs au fait qu'une liaison supplémentaire à la liaison vidéo est nécessaire, que la transmission des données sur cette liaison spécialisée peut être interrompue ou erronée du fait de perturbations des liaisons téléphoniques.

Le document INTERNATIONAL BROADCASTING CONVENTION , 23 - 27 Septembre 1988 BRIGHTON, UK, pages 318-322, S.R.ELY ET AL. "CONDITIONAL ACCESS SCRAMBLING TECHNIQUES FOR TERRESTRIAL UHF TELEVISION BROADCASTS" décrit un système de transmission de signaux de télévision embrouillés. Il y est recommandé d'utiliser un seul embrouilleur à la source du signal afin d'obtenir un signal embrouillé sur tout le réseau avec un seul embrouilleur qui modifie seulement les parties "actives" du signal de télévision et laisse intacts tous les signaux de synchronisation. Ce document propose en outre comme alternative d'implanter un embrouilleur sur chaque site de transmission.

D'autre part, EP - A - 0 489 929 décrit un système de décodage d'un signal de télévision reçu d'un satellite pour l'injecter dans un système de distribution par câble. Le signal est reçu puis mixé sous forme brouillée avec un autre signal de télévision qui est généré localement et brouillé d'après les données de brouillage du signal reçu.

La présente invention a pour but de pallier les inconvénients précités.

L'invention concerne un système de déport d'un embrouilleur pour un signal de télévision provenant d'une source audio et vidéo sur un site de production, le signal embrouillé étant transmis vers l'abonné à partir d'un site de transmission différent du site de production, caractérisé en ce qu'un embrouilleur local sur le site de production reçoit le signal de télévision pour fournir des données numériques nécessaires à l'embrouillage, en ce qu'un codeur réalise un codage numérique et entropique du signal de télévision, en ce que les données numériques et le signal de télévision codé sont transmis au site de transmission, et en ce qu'un embrouilleur déporté sur le site de transmission embrouille le signal de télévision décompressé à partir des données numériques reçues par le site de transmission en provenance du site de production.

Les caractéristiques et avantages de la présente invention ressortiront mieux de la description suivante, donnée à titre d'exemple et en référence aux figures annexées, où :
- la figure 1 représente une liaison haut débit entre un site de production avec embrouilleur et site de transmission selon l'art antérieur.
- la figure 2 représente une liaison bas débit entre un site de production et un site de transmission avec embrouilleur selon l'art antérieur.
- la figure 3 représente une liaison bas débit entre un site de production avec embrouilleur local et un site de transmission avec embrouilleur déporté.

L'invention consiste à déporter des circuits d'embrouillage d'un embrouilleur du site de production, sur le site de transmission, et à conserver des circuits de traitement sur le site de production, de manière à obtenir sur ce site, les données nécessaires aux circuits d'embrouillage pour les insérer au signal de télévision codé et compressé transmis au site de transmission.

L'invention permet ainsi de transmettre le signal vidéo entre le site de production et le site de transmission sur une liaison bas débit tout en conservant la confidentialité et sécurité nécessaire au système d'embrouillage.

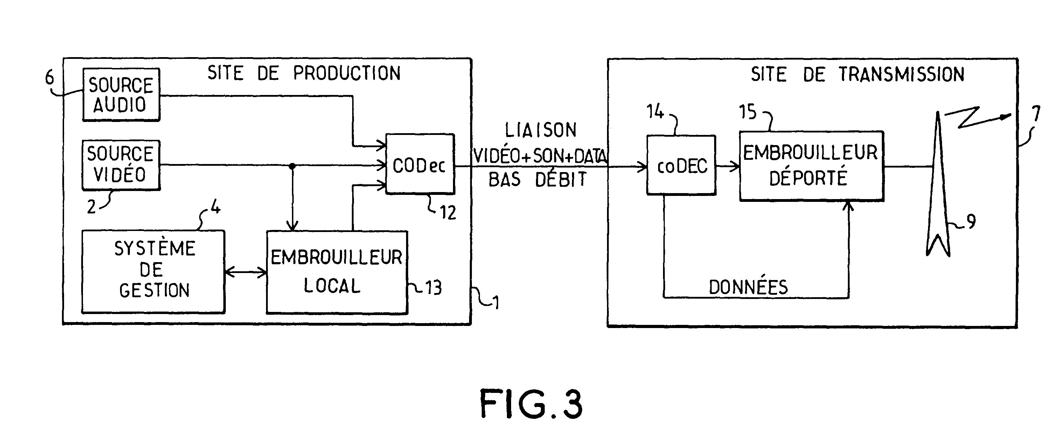

La configuration du système selon l'invention est représentée à la figure 3. Les numérotations de la figure 1 sont reprises pour les éléments identiques.

La source vidéo 2 sur le site de production 1 est distribuée simultanément à un codeur à débit réduit ou CODec 12 et à un embrouilleur 13 que l'on appellera local. Cet embrouilleur est, comme précédemment, relié à un système de gestion 4 pour recevoir des données de gestion d'abonné ou données de contrôle d'accès et des données de gestion technique ou données de commande.

Les données de contrôle d'accès concernent l'autorisation ou l'interdiction d'accès de l'abonné à un programme crypté, la sélection des programmes autorisés au niveau de l'abonné par la transmission des numéros des canaux autorisés etc... Elles ne sont pas directement exploitées par l'embrouilleur qui ne fait que les "intégrer" au signal vidéo pour permettre de les véhiculer vers le décodeur de l'abonné. Parmi ces données se trouvent les cryptogrammes des mots d'initialisation de générateurs pseudo-aléatoires du décodeur de l'abonné, qui seront décodés par ce dernier s'il y est autorisé.

Les données de commande concernent directement le fonctionnement de l'embrouilleur. Ce sont des données de commande nécessaires au paramètrage du système d'embrouillage proprement dit, c'est à dire nécessaires aux circuits électroniques de l'embrouilleur 13 comme explicité ci-après.

Un embrouilleur peut être arbitrairement décomposé en 2 parties bien distinctes, des circuits d'embrouillage fonctionnant d'une manière autonome sur la durée d'une image et des circuits de traitement générant les données nécessaires aux circuits d'embrouillage pour l'image suivante. Ces données sont par exemple les paramètres d'initialisation des générateurs pseudo-aléatoires. La génération de certaines de ces données se fait à partir des informations échangées avec le système de gestion 4. Ainsi, par exemple, une demande de commutation de mode provenant du système de gestion 4 est exploitée par les circuits de traitement pour transmettre aux circuits d'embrouillage, à partir d'une image donnée, les commandes d'embrouillage correspondant au mode.

L'embrouilleur local 13 est relié à un CODec 12, non par sa sortie analogique embrouillée, mais par une sortie série numérique qui permet de prélever les signaux numériques, entre autres, parmi ceux provenant des circuits de traitement. Ces données, synchrones du signal vidéo reçu en entrée de l'embrouilleur sont envoyées au rythme image sur une entrée du codeur à débit réduit CODec 12 appelée canal de données de service. Ces signaux concernent aussi bien les données de contrôle d'accès que les donnés de commande. En effet, les données de contrôle d'accès sont, tout comme les données de commande, transmises vers les circuits d'embrouillage mais alors, non pas dans le but d'être exploitées mais simplement incorporées au signal vidéo embrouillé. Elles sont ainsi formatées pour être transportées vers le décodeur de l'abonné, au rythme image, généralement lors du retour de trame. Le CODec 12 reçoit simultanément les signaux analogiques audio, provenant de la source audio 6, vidéo, provenant de la source vidéo 2 et les données numériques de commande et de contrôle d'accès provenant de l'embrouilleur local 13. La sortie vidéo embrouillée de cet embrouilleur n'est pas exploitée et les circuits d'embrouillage ne sont pas nécessaires dans cette application. La transmission des données échangées entre les circuits de traitement et ceux d'embrouillage vers l'extérieur de l'embrouilleur, selon un formatage donné, nécessite par contre des circuits spécifiques à cette exploitation. L'appelation embrouilleur local est ainsi tout à fait arbitraire et il s'agit en fait de circuits de traitement fournissant des signaux nécessaires au fonctionnement de circuits d'embrouillage.

Le CODec réalise le codage du signal audio, le codage et la compression du signal vidéo et leur multiplexage avec les données arrivant sur le canal des données de service.

Le signal codé numérique ainsi disponible en sortie du CODec, c'est à dire la vidéo, l'audio et les données, est transmis sur une liaison bas débit reliant le site de production 1 au site de transmission 7.

Cette liaison peut être considérée comme sûre. Les circuits CODec, par exemple du type 34 Mbits/s, sont généralement pourvus de fonctions de cryptage des données émises sur la liaison, cryptage paramétrable. Les algorithmes de compression du signal, le formatage des données et la cryptographie des messages transmis, intrinsèque à la liaison, peuvent être adaptés au niveau de sûreté souhaité. N'étant pas imposés ils peuvent évoluer au cours du temps.

La liaison est reliée, côté site de transmission, à l'entrée d'un décodeur à débit réduit, coDEC 14, qui réalise les opérations inverses du CODec 12. Les données reçues qui ont été cryptées pour la transmission sur la liaison bas débit sont décryptées, le signal vidéo est décompressé et décodé, les données de contrôle d'accès et de commande sont extraites du signal numérique reçu.

Les signaux audio et vidéo restitués par le coDEC sont alors appliqués à l'entrée d'un embrouilleur 15 que l'on appelle embrouilleur déporté. Les données de contrôle et de service, disponibles sur une sortie spécifique du coDEC appelée canal de données de service, sont transmises à l'embrouilleur 15 , par l'intermédiaire d'une entrée série numérique correspondant à la sortie numérique de l'embrouilleur local 13. Ici, les signaux sont fournis en entrée pour attaquer les circuits d'embrouillage. Des circuits spécifiques à cette exploitation sont ici également nécessaires pour prendre en compte ces données série et les transmettre aux circuits d'embrouillage selon les modalités d'échanges de données nécessaires entre les circuits d'embrouillage classique et les circuits de traitement. Les données sont récupérées au rythme de l'image et sont donc exploitées pour l'embrouillage de l'image suivante. Il s'agit des données de commande. Les données de contrôle d'accès sont également reçues au rythme image mais simplement pour être transmises à ce rythme avec le signal vidéo embrouillé. Ainsi, l'embrouilleur déporté exploite, non pas les données de ses circuits de traitement qui ne sont ici pas nécessaires, mais celles provenant des circuits de traitement de l'embrouilleur local pour brouiller les signaux vidéo reçus et les transmettre à l'aérien 9.

Les circuits de correction et de détection d'erreur des coDECs concernent généralement les seuls signaux numériques vidéo transmis. Les données transmises par le canal de données de service ne sont pas concernées. Ainsi, si une transmission même bruitée est habituellement sans effet sur le signal audio et vidéo reçu, elle peut entraîner une perte d'information au niveau des données transmises sur le canal. Pour cette raison, une détection d'erreur sur les données est effectuée au niveau de l'embrouilleur déporté, les blocs de données étant émis avec un codage de contrôle d'erreur. Sur détection d'erreur, les données reçues sont abandonnées et celles précédemment reçues sont exploitées. L'embrouilleur déporté est ainsi également pourvu de circuits de mémorisation et de circuits de traitement pour la gestion de ces données en cas d'erreur. Les données mémorisées permettent de déduire les valeurs des paramètres à prendre en compte et à abandonner, pour assurer un fonctionnement de l'embrouilleur sans discontinuité, c'est à dire une visibilité permanente des images transmises à l'abonné.

## Revendications

1. Système de déport d'un embrouilleur pour un signal de télévision provenant d'une source audio (6) et vidéo (2) sur un site de production (1), le signal embrouillé étant transmis vers l'abonné à partir d'un site de transmission (7) différent du site de production, caractérisé en ce qu'un embrouilleur local (13) sur le site de production (1) reçoit le signal de télévision pour fournir des données numériques nécessaires à l'embrouillage, en ce qu'un codeur (12) réalise un codage numérique et entropique du signal de télévision, en ce que les données numériques et le signal de télévision codé sont transmis au site de transmission (7), et en ce qu'un embrouilleur déporté (15) sur le site de transmission (7) embrouille le signal de télévision décompressé à partir des données numériques reçues par le site de transmission (7) en provenance du site de production (1).

2. Système selon la revendication 1, caractérisé en ce que les données numériques sont sérialisées et insérées, par multiplexage, au signal de télévision numérisé et compressé pour être transmises sur une même liaison reliant le site de production à celui de transmission.

3. Système selon la revendication 2, caractérisé en ce que la liaison est une liaison par fibre optique, par faisceau hertzien ou par câble et en ce que les données numériques transmises sur la liaison sont cryptées.

4. Système selon l'une quelconque des revendications précédentes, caractérisé en ce que les données numériques concernent des données de commande dont le mode d'embrouillage, les mots d'initialisation de générateurs pseudo-aléatoires.

5. Système selon l'une quelconque des revendications précédentes caractérisé en ce que les données numériques concernent des données de contrôle d'accès de l'abonné, dont le cryptogramme de la valeur d'initialisation des générateurs pseudo-aléatoires.

6. Système de déport selon l'une quelconque des revendications précédentes, caractérisé en ce que l'embrouilleur local (13) est constitué de circuits de traitement et en ce que l'embrouilleur déporté (15) est constitué de circuits d'embrouillage.

7. Système selon l'une quelconque des revendications précédentes caractérisé en ce que l'embrouilleur déporté comporte des circuits de gestion et de mémorisation des données reçues pour exploiter les données antérieures à une erreur de transmission des données numériques sur la liaison entre le site de production et de transmission.

## Patentansprüche

1. System zum Versetzen eines Verschlüsselers für ein Fernsehsignal von einer Audioquelle (6) und einer Videoquelle (2) in einem Produktionsbereich (1), wobei das verschlüsselte Signal zu dem Abonnenten von einem Übertragungsbereich (7) übertragen wird, der sich von dem Produktionsbereich unterscheidet, dadurch gekennzeichnet, daß ein örtlicher Verschlüsseler (13) im Produktionsbereich (1) das Fernsehsignal empfängt und für die Verschlüsselung benötigte digitale Daten bildet, daß ein Koder (12) eine digitale und entropische Kodierung des Fernsehsignals bewirkt, daß die digitalen Daten und das kodierte Fernsehsignal zu dem Übertragungsbereich (7) übertragen werden und daß ein auf den Übertragungsbereich (7) versetzter Entschlüsseler (15) das Fernsehsignal verschlüsselt, das aus den digitalen Daten dekomprimiert wird, die durch den Übertragungsbereich (7) von dem Produktionsbereich (1) empfangen werden.

2. System nach Anspruch 1, dadurch gekennzeichnet, daß die digitalen Daten in serielle Daten umgesetzt und durch Multiplexierung in das digitale Fernsehsignal eingefügt werden, das für eine Übertragung über dieselbe Verbindung komprimiert wird, die den Produktionsbereich mit dem Übertragungsbereich verbindet.

3. System nach Anspruch 2, dadurch gekennzeichnet, daß die Verbindung eine Verbindung mit optischen Fasern, mit einer Funkwelle oder mit Kabel ist, und daß die über die Verbindung übertragenen digitalen Daten verschlüsselt werden.

4. System nach einem der vorangehenden Ansprüche, dadurch gekennzeichnet, daß die digitalen Daten Steuerdaten, deren Verschlüsselungsmodus und die Wörter für die Auslösung der Pseudo-Zufallsgeneratoren enthalten.

5. System nach einem der vorangehenden Ansprüche, dadurch gekennzeichnet, daß die digitalen Daten Steuerdaten für den Zugriff des Abonnenten und deren Kryptogramm für den Wert der Auslösung der Pseudo-Zufallsgeneratoren enthalten.

6. System nach einem der vorangehenden Ansprüche, dadurch gekennzeichnet, daß der örtliche Verschlüsseler (13) durch Verarbeitungsschaltungen und der versetzte Verschlüsseler (15) durch Verschlüsselungsschaltungen gebildet ist.

7. System nach einem der vorangehenden Ansprüche, dadurch gekennzeichnet, daß der versetzte Verschlüsseler Schaltungen zur Steuerung und zur Speicherung der empfangenen Daten zur Auswertung der früheren Daten bei einem \bertragungsfehler der digitalen Daten auf der Verbindung zwischen dem Produktionsbereich und dem Übertragungsbereich enthält.

## Claims

1. System for displacing a scrambler in respect of a television signal originating from an audio (6) and video (2) source on a production site (1), the scrambled signal being transmitted to the subscriber from a transmission site (7) which differs from the production site, characterized in that a local scrambler (13) on the production site (1) receives the television signal so as to deliver digital data required for the scrambling, in that a coder (12) carries out digital and entropy coding of the television signal, in that the digital data and the coded television signal are transmitted to the transmission site (7) and in that a displaced scrambler (15) on the transmission site (7) scrambles the decompressed television signal on the basis of the digital data received by the transmission site (7), originating from the production site (1).

2. System according to Claim 1, characterized in that the digital data are serialized and inserted, by multiplexing, into the digitized and compressed television signal so as to be transmitted on one and the same link connecting the production site to the transmission site.

3. System according to Claim 2, characterized in that the link is a fibre optic link, wireless link or cable link and in that the digital data transmitted on the link are encrypted.

4. System according to any one of the preceding claims, characterized in that the digital data relate to command data including the mode of scrambling, the words for initializing pseudo-random generators.

5. System according to any one of the preceding claims, characterized in that the digital data relate to subscriber access control data, including the cryptogram of the value for initializing the pseudo-random generators.

6. Displacing system according to any one of the preceding claims, characterized in that the local scrambler (13) consists of processing circuits and in that the displaced scrambler (15) consists of scrambling circuits.

7. System according to any one of the preceding claims, characterized in that the displaced scrambler comprises circuits for managing and storing the data received so as to utilize the data prior to an error of transmission of the digital data on the link between the production and transmission site.
